(19)

**Europäisches Patentamt**
**European Patent Office**
**Office européen des brevets**

(11) **EP 4 704 352 A1**

(12) **EUROPEAN PATENT APPLICATION**

(43) Date of publication:
04.03.2026 Bulletin 2026/10

(21) Application number: 24315395.4

(22) Date of filing: 28.08.2024

(51) International Patent Classification (IPC):
***H04B 10/079*** (2013.01)

(52) Cooperative Patent Classification (CPC):
**H04B 10/0795; H04B 10/0791**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicants:
• **Nokia Networks France**
**91300 Massy (FR)**
• **Nokia Solutions and Networks GmbH & Co. KG**
**81541 München (DE)**
• **Nokia Solutions and Networks Italia S.p.A.**
**20121 Milano (MI) (IT)**

(72) Inventors:
• **Abdelli, Khouloud**
**80686 MUNICH (DE)**
• **Layec, Patricia**
**92220 BAGNEUX (FR)**
• **Boitier, Fabien**
**91300 MASSY (FR)**
• **Lonardi, Matteo**
**37069 VILLAFRANCA DI VERONA, VR (IT)**

(74) Representative: **Nokia EPO representatives**
**Nokia Technologies Oy**
**Karakaari 7**
**02610 Espoo (FI)**

(54) **OPTICAL SIGNAL ANOMALY DETECTION**

(57) An apparatus for an optical receiver, the apparatus comprising processing circuitry configured to: receive an original state-of-polarization, SOP, sequence, the original SOP sequence being a sequence of SOP samples of an optical signal received at the optical receiver; generate a reconstructed SOP sequence by applying a lossy sequence reconstruction algorithm to the original SOP sequence; determine a level of dissimilarity between the original SOP sequence and the reconstructed SOP sequence; and signal an anomaly in response to the level of dissimilarity exceeding a set threshold.

**Fig. 3**

150 — RECEIVE ORIGINAL STATE-OF-POLARIZATION SEQUENCE

SOP-SEQ-ORIG

152 — GENERATE RECONSTRUCTED SOP SEQUENCE

SOP-SEQ-REC

154 — DETERMINE LEVEL OF DISSIMILARITY BETWEEN ORIGINAL SOP SEQUENCE AND RECONSTRUCTED SOP SEQUENCE

LVL-DISS

156 — SIGNAL ANOMALY IN RESPONSE TO LEVEL OF DISSIMILARITY EXCEEDING THRESHOLD

AN

Processed by Luminess, 75001 PARIS (FR)

## Description

## Technical Field

Various example embodiments relate to an apparatus for an optical receiver.

Further example embodiments relate to a method for an optical receiver.

## Background

Optical fiber networks serve as the backbone of modern telecommunications allowing information to be sent at high speeds, e.g., from ultrashort links in data centers to transoceanic distances throughout the world, connecting billions of users globally. There is a desire that such network infrastructure be constantly available and reliable. Therefore, it is desirable to detect potential failures in such networks.

## Summary

Various example embodiments of the disclosure are set out by the independent claims. The example embodiments and features, if any, described in this specification, that do not fall under the scope of the independent claims, are to be interpreted as examples useful for understanding various example embodiments of the disclosure.

Some examples relate to an apparatus for an optical receiver, the apparatus comprising processing circuitry configured to: receive an original state-of-polarization, SOP, sequence, the original SOP sequence being a sequence of SOP samples of an optical signal received at the optical receiver; generate a reconstructed SOP sequence by applying a lossy sequence reconstruction algorithm to the original SOP sequence; determine a level of dissimilarity between the original SOP sequence and the reconstructed SOP sequence; and signal an anomaly in response to the level of dissimilarity exceeding a set threshold. In some examples, this enables to provide a pro-active fault detection, where indications of potential, e.g., future anomalies may be detected comparatively early, e.g., as compared to some conventional approaches based, e.g., on reactive fault management.

In some examples, the apparatus is connectable to or integrated in the optical receiver.

In some examples, the lossy sequence reconstruction algorithm is configured to reconstruct SOP sequences of an anomalous type less accurately (i.e. faithfully) than SOP sequences of a normal type. Thus, an SOP sequence of an anomalous type will be reconstructed less accurately than an SOP sequence of a normal type. Hence, differences between the original SOP sequence and the reconstructed sequence will generally be greater if the SOP sequence is of anomalous type than if the SOP sequence is of a normal type. SOP sequences of a normal type are identical or similar to those that may be observed routinely during normal operation of the optical fiber.

In some examples, the lossy sequence reconstruction algorithm is implemented at least partly in a neural network.

In some examples, the lossy sequence reconstruction algorithm is implemented at least partly in a neural network, wherein the neural network is trained to reconstruct SOP sequences of a normal type but not trained to reconstruct SOP sequences of an anomalous type. In some examples, this enables to provide a particularly precise detection of anomalies.

In some examples, in this disclosure, any statement that a neural network is trained to do a certain action shall be understood in the sense that the neural network itself has been trained to do the action, or that the neural network has been derived from a neural network that has been trained to do the action.

In some examples, the neural network is or comprises an autoencoder. The concept of an "autoencoder" is described, e.g., in https://en.wikipedia.org/wiki/Autoencoder. Further details related to an autoencoder as used by at least some examples of this disclosure are provided further below.

In some examples, each sample in the sequence of SOP samples represents a Stokes vector.

Some examples relate to an apparatus for an optical receiver, the apparatus comprising means for: receiving an original state-of-polarization, SOP, sequence, the original SOP sequence being a sequence of SOP samples of an optical signal received at the optical receiver; generating a reconstructed SOP sequence by applying a lossy sequence reconstruction algorithm to the original SOP sequence; determining a level of dissimilarity between the original SOP sequence and the reconstructed SOP sequence; and signaling an anomaly in response to the level of dissimilarity exceeding a set threshold.

Some examples relate to an optical receiver comprising at least one apparatus according to the disclosure.

Some examples relate to a method for an optical receiver, comprising: receiving an original state-of-polarization, SOP, sequence, the original SOP sequence being a sequence of SOP samples of an optical signal received at the optical receiver; generating a reconstructed SOP sequence by applying a lossy sequence reconstruction algorithm to the original SOP sequence; determining a level of dissimilarity between the original SOP sequence and the reconstructed SOP sequence; and signaling an anomaly in response to the level of dissimilarity exceeding a set threshold.

In some examples the lossy sequence reconstruction algorithm (ALG) is configured to reconstruct SOP sequences of an anomalous type less accurately than SOP sequences of a normal type.

In some examples the method comprises: implementing the lossy sequence reconstruction algorithm at least partly in a neural network.

In some examples, the method comprises: implementing the lossy sequence reconstruction algorithm at least partly in a neural network, wherein the neural network is trained to reconstruct SOP sequences of a normal type but not trained to reconstruct SOP sequences of an anomalous type.

Some examples relate to a computer program comprising instructions which, when executed by an apparatus, cause the apparatus to perform the method according to the disclosure.

Some examples relate to a computer-readable storage medium, for example a non-transitory computer-readable storage medium, comprising the computer program according to the disclosure.

Some examples relate to a data carrier signal carrying and/or characterizing the computer program according to the disclosure.

**Brief Description of the Figures**

Fig. 1A    shows a simplified block diagram according to some examples,

Fig. 1B    shows a simplified block diagram according to some examples,

Fig. 2    shows a simplified block diagram according to some examples,

Fig. 3    shows a simplified flow chart according to some examples,

Fig. 4    shows a simplified flow chart according to some examples,

Fig. 5    shows a simplified flow chart according to some examples,

Fig. 6    shows a simplified flow chart according to some examples,

Fig. 7    shows a simplified flow chart according to some examples,

Fig. 8    shows a simplified flow chart according to some examples,

Fig. 9    shows a simplified flow chart according to some examples,

Fig. 10    shows a simplified flow chart according to some examples,

Fig. 11    shows a simplified flow chart according to some examples,

Fig. 12    shows a simplified block diagram according to some examples,

Fig. 13    shows a simplified block diagram according to some examples,

Fig. 14    shows a simplified block diagram according to some examples,

Fig. 15    shows a simplified diagram according to some examples,

Fig. 16    shows a simplified diagram according to some examples,

Fig. 17    shows a simplified block diagram according to some examples,

Fig. 18    shows a simplified diagram according to some examples,

Fig. 19    shows a simplified flow chart according to some examples,

Fig. 20    shows a simplified block diagram according to some examples.

**Description of some Example Embodiments**

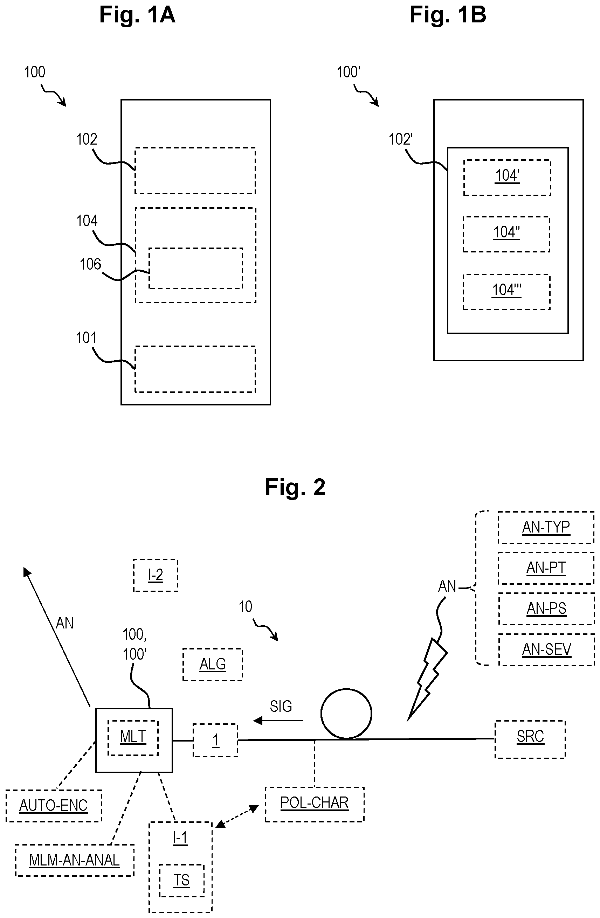

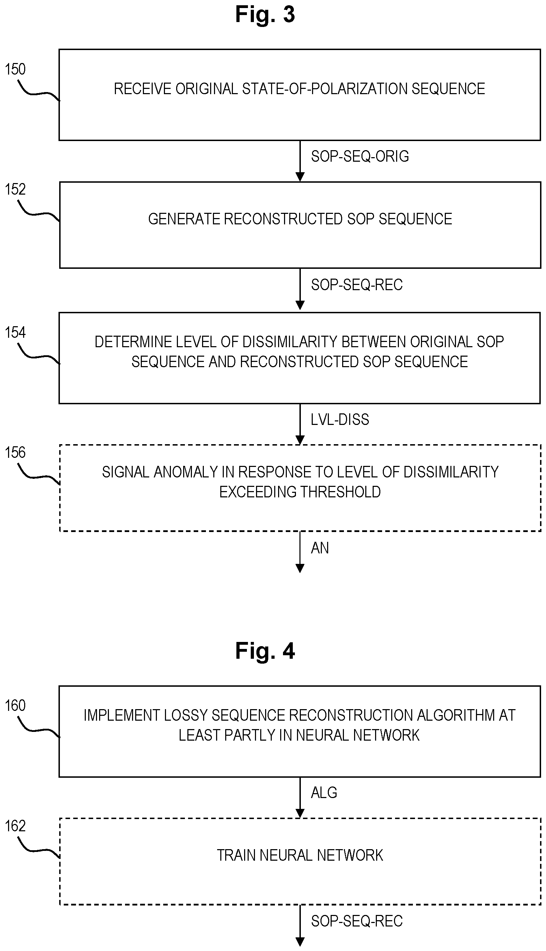

Some examples, see, for example, Fig. 1A, 2, 3, relate to an apparatus 100 (Fig. 1A, 2) for an optical receiver 1 (Fig. 2), the apparatus 100 comprising processing circuitry 101 (Fig. 1) configured to: receive 150 (Fig. 3) an original state-of-polarization, SOP, sequence SOP-SEQ-ORIG, the original SOP sequence SOP-SEQ-ORIG being a sequence of SOP samples of an optical signal SIG (Fig. 2) received at the optical receiver 1, e.g., from an optical fiber 10; generate 152 a reconstructed SOP sequence SOP-SEQ-REC by applying a lossy sequence reconstruction algorithm ALG (Fig. 2) to the original SOP sequence SOP-SEQ-ORIG; determine 154 a level LVL-DISS of dissimilarity between the original SOP sequence and the reconstructed SOP sequence; and, optionally, signal 156 an anomaly AN in response to the level LVL-DISS of dissimilarity exceeding a set threshold. In some examples, this enables to provide a pro-active fault detection, where indications of potential, e.g., future anomalies may be detected comparatively early, e.g., as compared to some conventional approaches based, e.g., on reactive fault management.

In some examples, Fig. 2, the apparatus 100 is connectable to or integrated in the optical receiver 1.

In some examples, alternatively or additionally to the signalling 156 of the anomaly AN, a local (e.g., within the apparatus 100 and/or within the optical receiver 1) reaction may be performed.

In some examples, Fig. 2, the lossy sequence reconstruction algorithm ALG is configured to reconstruct SOP sequences of an anomalous type less accurately than SOP sequences of a normal type. In some examples, this may enable a particularly sensitive detection of an anomaly.

In some examples, Fig. 2, the lossy sequence reconstruction algorithm ALG is implemented using at least one machine learning technique MLT, e.g., based on at least one neural network. In some examples, the lossy sequence reconstruction algorithm ALG is implemented at least partly in a neural network.

In some examples, Fig. 2, at least one machine learning technique MLT other than a neural network may be used to implement the lossy sequence reconstruction algorithm ALG.

In some examples, the lossy sequence reconstruction algorithm ALG is implemented at least partly in a neural network, wherein the neural network is trained to reconstruct SOP sequences of a normal type but not trained to reconstruct SOP sequences of an anomalous type. In some examples, this enables to provide a particularly precise detection of anomalies.

In some examples, Fig. 2, the neural network is or comprises an autoencoder AUTO-ENC.

In some examples, Fig. 3, each sample in the sequence SOP-SEQ-ORIG, SOP-SEQ-REC of SOP samples represents a Stokes vector.

In some examples, the Stokes vector may comprise at least one Stokes parameter associated with an optical component or device the signal SIG has interacted with. In some examples, the at least one optical fiber 10 is an optical component the signal SIG has interacted with. In some examples, the at least one Stokes parameter characterizes at least one aspect of a state of polarization, SOP, of the optical signal SIG, e.g., as transmitted through the at least one optical fiber 10, e.g., from a transmitter or source, SRC, (Fig. 2) to the apparatus 100 or the receiver 1, respectively. In some examples, the SOP may correlate with (and thus, e.g., provide information on) an impending or current anomaly AN, e.g., of the optical fiber 10.

In some examples, Fig. 1A, e.g., alternatively or additionally to the circuitry 101, the apparatus 100 may comprise at least one processor 102, and at least one memory 104 storing instructions 106. In some examples, the instructions 106, when executed by the at least one processor 102, may cause the apparatus 100 to perform at least one aspect according to the disclosure, see, for example, Fig. 3.

Some examples, Fig. 1B, relate to an apparatus 100' for an optical receiver 1 (Fig. 2), the apparatus 100' (Fig. 1B) comprising means 102' for: receiving 150 (Fig. 3) an original state-of-polarization, SOP, sequence, the original SOP sequence being a sequence of SOP samples of an optical signal received at the optical receiver; generating 152 a reconstructed SOP sequence by applying a lossy sequence reconstruction algorithm to the original SOP sequence; determining 154 a level of dissimilarity between the original SOP sequence and the reconstructed SOP sequence; and, optionally, signaling 156 an anomaly in response to the level of dissimilarity exceeding a set threshold.

Some examples, Fig. 2, relate to an optical receiver 1 comprising at least one apparatus 100, 100' according to the disclosure.

Some examples, Fig. 3, relate to a method for an optical receiver 1, comprising: receiving 150 an original state-of-polarization, SOP, sequence, the original SOP sequence being a sequence of SOP samples of an optical signal received at the optical receiver; generating 152 a reconstructed SOP sequence by applying a lossy sequence reconstruction algorithm to the original SOP sequence; determining 154 a level of dissimilarity between the original SOP sequence and the reconstructed SOP sequence; and, optionally, signaling 156 an anomaly in response to the level of dissimilarity exceeding a set threshold.

In some examples, and as already mentioned above, the lossy sequence reconstruction algorithm ALG is configured to reconstruct SOP sequences of an anomalous type less accurately than SOP sequences of a normal type.

In some examples, Fig. 4, the method comprises: implementing 160 the lossy sequence reconstruction algorithm ALG at least partly using a machine learning technique MLT, e.g., in a neural network.

In some examples, the method comprises: implementing the lossy sequence reconstruction algorithm ALG at least partly in a neural network, wherein the neural network is trained to reconstruct SOP sequences of a normal type but not trained to reconstruct SOP sequences of an anomalous type.

In this context, the optional block 162 of Fig. 4 symbolizes training the neural network, e.g., training the neural network to reconstruct SOP sequences of a normal type. In some examples, the training 162 does not comprise training the neural network to reconstruct SOP sequences of an abnormal type.

In some examples, SOP sequences of a normal type are such SOP sequences that can be expected during a regular, e.g., normal, operation, which is, for example, basically free of errors.

In some examples, SOP sequences of an abnormal type are such SOP sequences that cannot be expected during a regular, e.g., normal, operation, which is, for example, basically free of errors. In some examples, SOP sequences of an abnormal type can be expected if there is at least one error within at least one component (e.g., fiber 10) or device (not shown, e.g., transmitter or amplifier or multiplexer, or splitter, or any other component) the optical signal SIG (Fig. 2) has interacted with or which is involved in processing and/or guiding the optical signal SIG.

Some examples, see especially Fig. 1A, 2, 5, relate to an apparatus 100 for processing data associated with at least one optical fiber 10 (Fig. 2). The apparatus 100 comprises at least one processor 102, and at least one memory 104 storing instructions 106. The instructions 106, when executed by the at least one processor 102, cause the apparatus 100 to: provide 200 (Fig. 3) first information I-1 characterizing polarization characteristics POL-CHAR (Fig. 2) of light propagating in the at least one optical fiber 10, determine 202 a predicted state STATE-PRED of the at least one optical fiber 10 based on the first information I-1 using at least one machine learning technique MLT, and determine 204 second information 1-2 characterizing a potential anomaly AN with respect to the at least one optical fiber 10 based on a comparison of the predicted state STATE-PRED with an actual state of the at least one optical fiber 10. In some examples, this enables to provide a proactive fault detection, where indications of potential or future anomalies AN may be detected comparatively early, e.g., as compared to some conventional approaches based, e.g., on reactive fault management.

In some examples, Fig. 2, the first information I-1 comprises a time series of at least one Stokes parameter associated with the at least one optical fiber 10, e.g., at least similar to the original SOP sequence SOP-SEQ-ORIG of Fig. 3. In some examples, the at least one Stokes parameter characterizes at least one aspect of a state of polarization, SOP, of an optical signal SIG transmitted through the at least one optical fiber 10, e.g., from a transmitter or source, SRC, (Fig. 2) to the apparatus 100. The SOP may correlate with (and thus provide information on) an impending or current anomaly AN of the optical fiber 10.

In some examples, Fig. 2, the first information I-1, e.g., information related to the state of polarization, may be determined using a coherent optical receiver 1. The coherent optical receiver 1 may be configured to perform polarimetric measurements, for example.

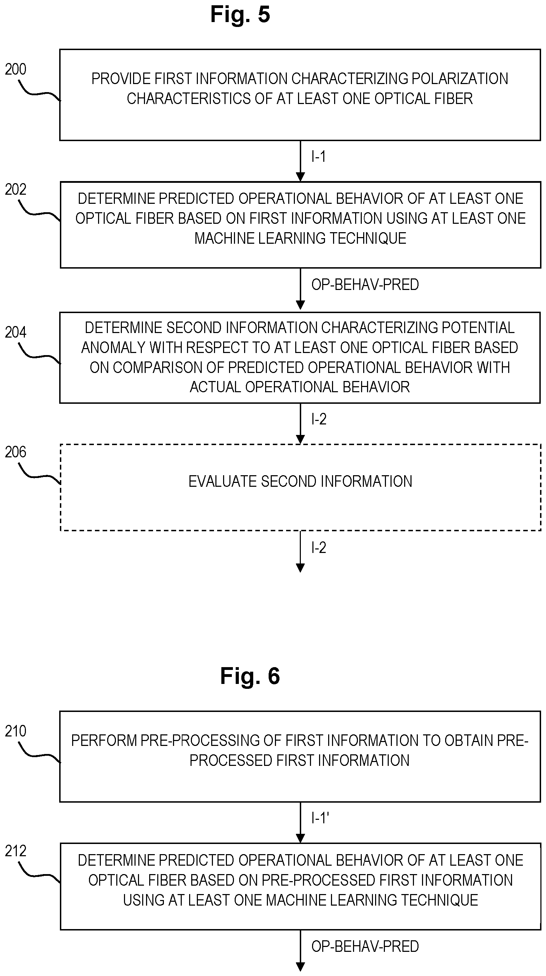

In some examples, see Fig. 2, the apparatus 100 may provide the first information I-1 autonomously, e.g., using such coherent optical receiver. In some other examples, the apparatus 100 may receive the first information I-1 from at least one further entity. In other words, in some examples, Fig. 5, providing the first information I-1 may comprise at least one of: a) determining the first information I-1, e.g., locally at the apparatus 100, e.g., using a coherent optical receiver 1, or b) receiving the first information I-1 from at least one further entity.

The optional block 206 of Fig. 5 symbolizes an optional evaluation of the second information 1-2.

In some examples, Fig. 6, the instructions 106, when executed by the at least one processor 102, cause the apparatus 100 to: perform 210 pre-processing of the first information I-1 to obtain pre-processed first information I-1', wherein the pre-processing 210 comprises at least one of: a) filtering (e.g., for reducing a noise level or energy, e.g., by applying at least one denoising method such as, e.g., a moving average filter or a wavelet transform), or b) splitting at least a portion of the first information I-1 to obtain one or more data sequences comprising a predetermined (e.g., fixed) length, or c) downsampling (e.g., to reduce a computational complexity for potentially following further processing stage(s)), determine 212 the predicted state STATE-PRED of the at least one optical fiber 10 based on the pre-processed first information I-1'.

In some examples, at least one of the aspects of Fig. 6 may be applied to the original SOP sequence SOP-SEQ-ORIG of Fig. 3.

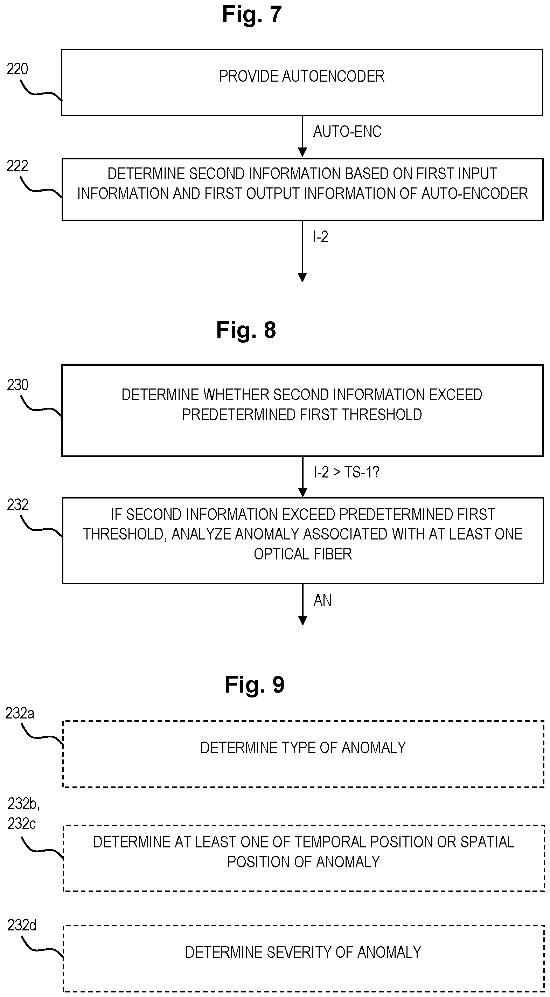

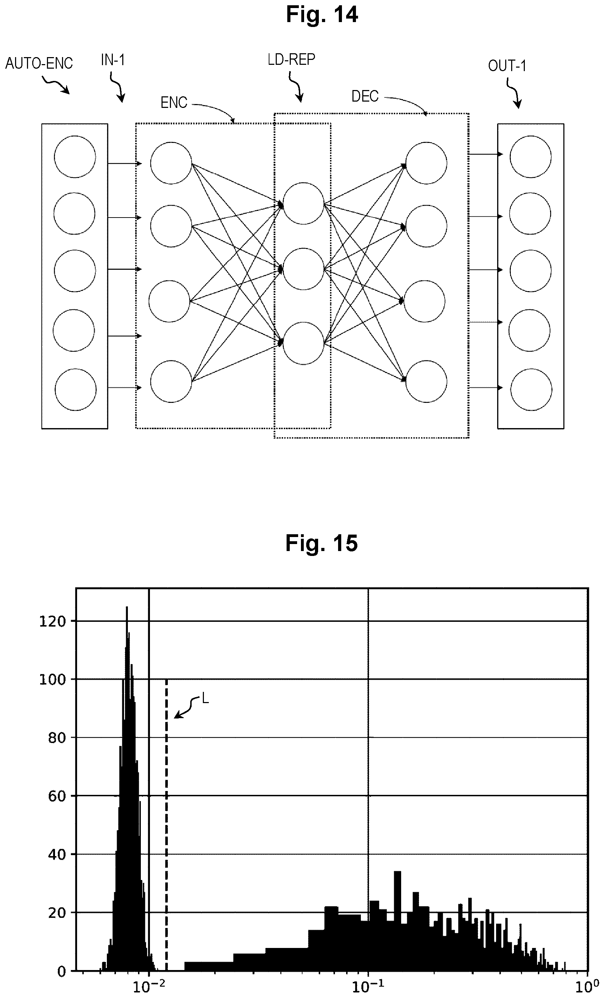

In some examples, Fig. 7, the instructions 106, when executed by the at least one processor 102, cause the apparatus 100 to: provide 220 an autoencoder AUTO-ENC configured to receive at least a portion of the first information I-1 or information I-1' derived from the first information I-1 (e.g., the pre-processed first information I-1') as first input information IN-1 (for details see Fig. 14 explained further below) and to provide, based on the first input information IN-1, reconstructed (e.g., predicted) first input information as first output information OUT-1 (Fig. 14), determine 222 (Fig. 7) the second information I-2 based on the first input information IN-1 and the first output information OUT-1 of the autoencoder AUTO-ENC. Thus, in some examples, the autoencoder AUTO-ENC may, e.g., be used for detecting an anomaly, e.g., as an anomaly detector.

In some examples, e.g., given the pre-processed first information I-1', e.g., SOP data representing a present behavior of the optical fiber 10 or a system comprising the optical fiber 10, respectively, the autoencoder, e.g., anomaly detector, may predict a monitored behavior (e.g., based on historic monitoring data) and may compare the actual behavior (as, e.g., characterized by the pre-processed first information) to the predicted behavior (as, e.g., characterized by the first output information OUT-1 of the autoencoder).

In some examples, the autoencoder AUTO-ENC as provided by block 220 of Fig. 7 may, e.g., be used for implementing 160 the lossy sequence reconstruction algorithm ALG according to Fig. 4.

In some examples, an anomaly AN (Fig. 2) may be recognized when the actual behavior, e.g., in terms of one or more SOP properties, deviates from an expected behavior, e.g., by greater than a given threshold. In other words, in some examples, the apparatus 100 (Fig. 2) may conclude that an anomaly AN with respect to the optical fiber 10 is present if the actual behavior deviates from expected behavior by greater than a given threshold. In some cases, this may, e.g., be indicated by the second information I-2 as obtained according to some examples. In some other examples, the level of dissimilarity LVL-DISS as, e.g., obtained by block 154 of Fig. 3 being above a certain threshold triggers an indication (or a message or an alert) indicating that an anomaly AN is detected.

In some examples, Fig. 2, the autoencoder AUTO-ENC, e.g., anomaly detector, may, e.g., be trained using known-normal data (e.g., SOP fluctuations for which no event is triggered along the optical fiber 10), as, e.g., acquired when the monitored optical fiber 10 or optical system comprising the optical fiber 10, behaves normally, e.g., to learn the features modelling the normal system behavior. In some examples, the anomaly detector may, e.g., be based on or implement using any appropriate type of machine learning technique, e.g., alternatively to an autoencoder. But, in some examples, the anomaly detector may, e.g., be implemented as an autoencoder, as mentioned above. In some examples, e.g., once trained, the anomaly detector may be deployed, e.g., in the field, e.g., to recognize anomalies.

In some examples, Fig. 8, the instructions 106, when executed by the at least one processor 102, cause the apparatus 100 to: determine 230 whether the second information I-2 exceed a predetermined first threshold TS-1, and, if the second information I-2 exceed the predetermined first threshold TS-1, analyze 232 an anomaly AN associated with the at least one optical fiber 10.

In some examples, Fig. 9, analyzing 232 (Fig. 6) the anomaly AN associated with the at least one optical fiber 10 comprises at least one of: a) determining 232a a type AN-TYP (Fig. 2) of the anomaly AN, or b) determining 232b, 232c at least one of a b1) temporal position AN-PT, or b2) spatial position AN-PS of the anomaly AN, or c) determining 232d a severity AN-SEV of the anomaly AN. In some examples, the type AN-TYP of the anomaly AN may, e.g., indicate a root cause of a disturbance of the optical fiber 10, such as, e.g., at least one of a) mechanical stress, such as, e.g., caused by excavation works, or b) fiber tapping, or c) earthquake, or d) other vibrations.

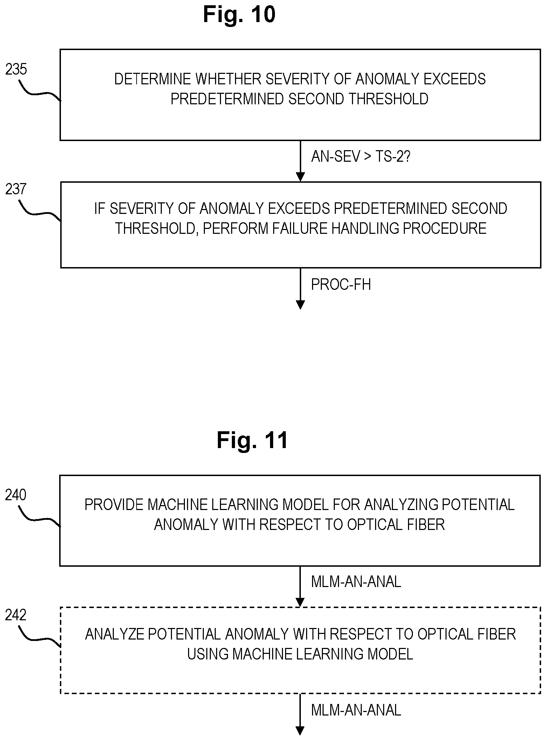

In some examples, Fig. 10, the instructions 106, when executed by the at least one processor 102, cause the apparatus 100 to: determine 235 whether the severity AN-SEV of the anomaly AN exceeds a predetermined second threshold TS-2, and, if the severity AN-SEV of the anomaly AN exceeds the predetermined second threshold TS-2, perform 237 a failure handling procedure PROC-FH. In some examples, this enables to apply at least one aspect of, e.g., predictive maintenance, e.g., with respect to the optical fiber, such as, e.g., performing further checks associated with the anomaly, an/or initiating maintenance procedures.

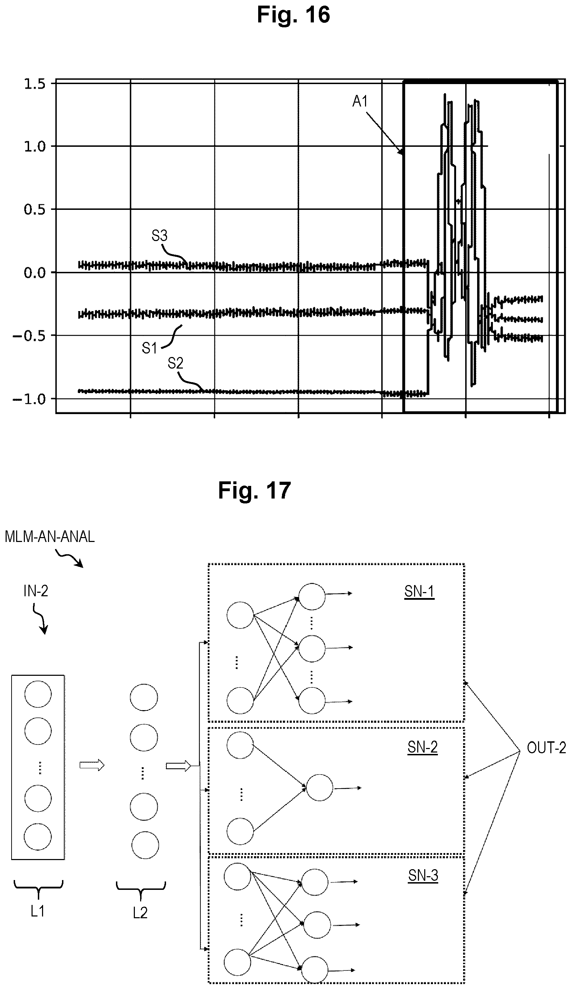

In some examples, Fig. 11, the instructions 106, when executed by the at least one processor 102, cause the apparatus 100 to: provide 240 a machine learning model MLM-AN-ANAL (see also Fig. 17) for analyzing the potential anomaly AN with respect to the at least one optical fiber 10, wherein the machine learning model MLM-AN-ANAL is configured to receive at least a portion of the first information I-1 or information I-1' derived from the first information (e.g., the pre-processed first information I-1') as second input information IN-2 and to provide, based on the second input information IN-2, second output information OUT-2 characterizing at least one of: a) the type AN-TYP (Fig. 2) of the anomaly, or b) the temporal position AN-PT of the anomaly, or c) the spatial position AN-PS of the anomaly, or d) the severity AN-SEV of the anomaly.

In some examples, the machine learning model MLM-AN-ANAL is configured to receive the level of dissimilarity LVL-DISS as, e.g., provided by block 154 of Fig.

3, and to provide, based on the level of dissimilarity LVL-DISS, the second output information OUT-2 as mentioned above.

In some examples, Fig. 11, the instructions 106, when executed by the at least one processor 102, cause the apparatus 100 to: analyze 242 the potential anomaly AN with respect to the at least one optical fiber 10 using the machine learning model MLM-AN-ANAL.

In some examples, Fig. 17, the machine learning model MLM-AN-ANAL comprises an input layer L1 for receiving the second input information IN-2, at least one hidden (e.g., intermediate) layer L2 for processing output information of the input layer L1, and two or more sub-networks SN-1, SN-2, SN-3 for processing output information of the at least one hidden layer L2.

In some examples, Fig. 17, at least one of the of the two or more sub-networks SN-1, SN-2, SN-3 is or are specifically configured and/or trained to provide a respective category of the second output information OUT-2, such as, e.g., a) a type or identification of an anomaly, or b) a localization of the anomaly, or c) a severity of the anomaly.

In some examples, the machine learning model MLM-AN-ANAL of Fig. 17 may be used to perform at least some aspects of Fig. 3 or 4, e.g., for implementing the autoencoder AUTO-ENC (Fig. 2).

In some examples, Fig. 1B, the means 102', may, e.g., comprise at least one processor 102 (see, for example, Fig. 1A), and at least one memory 104 storing instructions 106 that, when executed by the at least one processor 102, cause the apparatus 100' to perform at least one of the aforementioned aspects of the disclosure.

In some examples, Fig. 1B, the means 102' may, e.g., comprise circuitry 104' configured to perform at least one of the aforementioned aspects of the disclosure.

In some examples, Fig. 1B, the means 102' may, e.g., comprise an integrated circuit, IC, e.g., an application-specific integrated circuit, ASIC, 104''.

In some examples, Fig. 1B, the means 102' may, e.g., comprise a programmable logic device such as, e.g., a field programmable gate array, FPGA, 104'''.

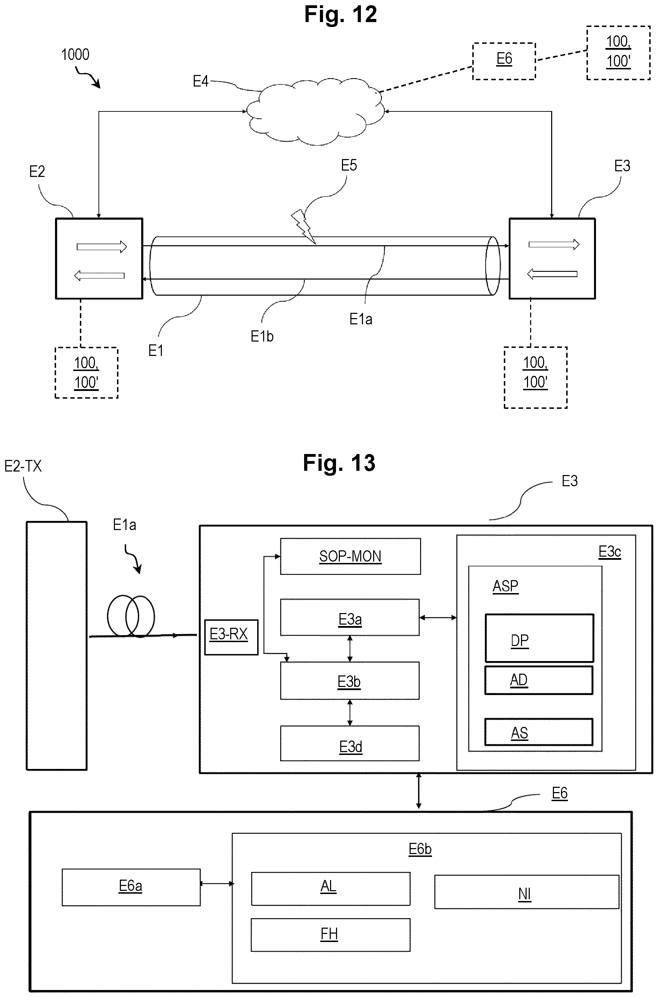

Some examples, Fig. 12, relate to a device E2, E3, E6 for an optical communication system 1000 comprising at least one apparatus 100, 100' according to the disclosure. In some examples, the device E2, E3 may, e.g., be at least one of: a) a receiver, or b) a transmitter, or c) a transceiver, e.g., for an optical communication system 1000.

In some examples, a communication path or network E4, e.g., other than the optical fibers E1a, E1b or the cable E1, may be provided to at least temporarily enable an information exchange between at least some components E2, E3, E6.

Some examples, Fig. 12, relate to an optical communication system 1000 comprising at least one apparatus 100, 100' according to the disclosure.

In some examples, Fig. 12, the at least one apparatus 100, 100' may be associated with, e.g., provided for or integrated in, an optional entity E6 for control and/or management of at least one aspect of the optical communication system 1000. In some examples, the control and/or management entity E6 may exchange information with at least one further component E2, E3, e.g., via the network E4.

In some examples, a functionality for detecting and/or analyzing an anomaly E5 associated with, e.g., of, the optical fiber E1a, E1b, may at least partly be located at or within at least one of the components E2, E3, E6. In some examples, the functionality for detecting and/or analyzing an anomaly E5 associated with, e.g., of, the optical fiber E1a, E1b, may also be distributed over several components E2, E3, E6.

In the following, further aspects and examples are disclosed, which, in some examples, may be combined with at least one of the aspects and/or examples disclosed above.

In some examples, Fig. 12, one or more aspects of a system for at least one of: a) detecting, or b) localizing, or c) classifying, or d) repairing anomalies E5 of an optical fiber E1a, E1b, e.g., in an optical fiber infrastructure, may be provided. In some examples, the system may be or form part of the optical communication system 1000.

In some examples, a, for example unsupervised, machine learning method may be used, that is configured to learn a normal system behavior, e.g., of at least one component of the optical communication system 1000 (e.g., of at least one optical fiber E1a, E1b), e.g., based on training data that includes, for example, SOP time series data collected during a normal behavior of the optical communication system 1000 or monitored optical fiber infrastructure. In some examples, the system may identify an anomaly in the system behavior, e.g., an anomaly of the optical fiber E1a, E1b, in response to finding a deviation between a measured system behavior, e.g., as regularly determined, e.g., based on the first information I-1 (see, for example, block 200 of Fig. 5) and a normal behavior, e.g., as predicted by the machine learning method.

In some examples, the measured system behavior may be characterized by data of an, e.g., recently, measured SOP time series, e.g., in the form of the first information I-1, and the training data for the machine learning method may include earlier SOP time series data, which was, e.g., measured during a normal operation of the system 1000.

In some examples, e.g., if the monitored optical communication system 1000 or at least one component E1a, E1b thereof is behaving abnormally, a, for example supervised, machine learning method may be used to identify the type of the anomaly, localize it, and quantify its severity. In some examples, a corrective action may be performed, e.g., to fix the identified anomaly.

In some examples, Fig. 12, at least some aspects of the disclosure may be provided in the form of an anomaly detection module, which is configured to assess whether the monitored system 1000 is acting abnormally, e.g., by comparing recent SOP time series data representing an actual system behavior to a predicted normal behavior. In some examples, the anomaly detection module may be provided in at least some of the components E2, E3, E6. In some examples, the anomaly detection module may be configured to perform at least some aspects of Fig. 3 or Fig. 4.

In some examples, Fig. 12, at least some aspects of the disclosure may be provided in the form of an anomaly analyzer module, which is configured to identify and localize the type of a discovered, e.g., detected, anomaly. In some examples, the anomaly analyzer module may be provided in at least some of the components E2, E3, E6.

In some examples, the principle of the disclosure enables to detect, classify, localize, and quantify disturbances or transients (e.g., anomalies) in optical fibers based on at least one of the first information I-1, which characterizes the polarization characteristics POL-CHAR (Fig. 2) of at least one optical fiber 10 (Fig. 2), E1a, E1b (Fig. 12), or the level LVL-DISS of dissimilarity as, e.g., obtained by block 154 of Fig. 3. In some examples, the first information I-1 may be provided based on or in the form of a, e.g., continuous, e.g., real-time, streaming of SOP data.

In some examples, the principle of the disclosure enables to provide a proactive fiber infrastructure maintenance.

Returning to Fig. 12, the optical communication system 1000 may form an optical network with two nodes, e.g., devices E2, E3, which are connected by the optical fibers E1a, E1b, each of which is hosted in a bundle E1. Note that, in some examples, the network may comprise additional nodes or bundles, which are not depicted by Fig. 12, for the sake of clarity, and without loss of generality.

In some examples, Fig. 12, the nodes E2, E3 can be any type of optical network element, including, but not limited to, wavelength division multiplexing (WDM) terminals, optical add/drop multiplexers, routers, etc. In some examples, the nodes E2 and E3 comprise optical transceivers symbolized by the block arrows, for which no individual reference signs are provided.

In some examples, Fig. 12, the nodes E2, E3 may communicate bidirectionally with each other. As an example, the node E2 transmits to the node E3 over the optical fiber E1a while the node E3 transmits to the node E2 over the optical fiber E1b. Consequently, in some examples, a disturbance E5 occurring on the bundle E1 may be experienced on both fibers E1a, E1b. Note that in some examples, a disturbance E5 of the bundle or optical fiber cable E1 may be a, e.g., any, movement or vibration of the cable that may, e.g., foreshadow potential interference, e.g., with a, for example digital, communication via the cable E1 or an actual physical damage to the cable E1. In some examples, numerous factors may lead to disturbances. In some examples, natural disasters like earthquakes or tsunamis may, e.g., displace or vibrate the optical fibers E1a, E1b in a way that may damage them or that may interfere with communications being transmitted, e.g., circulated between the nodes E2, E3.

In some examples, human activities such as digging or excavation may result in similar disturbances. In some examples, a physical contact, such as an impact from a vehicle (not shown), could be the cause of inducing a disturbance in an optical fiber E1a, E1b. In some examples, a disturbance may be brought on also by external vibrations (such as those produced by bridges, roads, trains, etc.), weather-related factors (such as lighting, wind, etc.), or other factors.

In some examples, Fig. 12, monitoring for changes in the state of polarization (SOP) of signals transmitted via at least one optical fiber E1a, E1b may help to detect and/or locate disturbances E5 along the fiber optic cable E1, e.g., with comparatively high sensitivity.

In some examples, the state of polarization can be determined using either a coherent digital signal processor (e.g., DSP) receiver performing polarimetric measurements, e.g., from a coherent signal laser source, or an external polarimetric measuring equipment (such as a polarimeter) designed to receive a polarized source.

In some examples, Fig. 12, at least one coherent optical receiver in at least one of the nodes E2, E3 may be used that is configured to output SOP values (e.g., in the form of the sequence SOP-SEQ-ORIG), which, in some examples, may be used as the first information I-1 already explained above.

In some examples, the state of polarization may be characterized as having either a linear, or elliptical, or circular polarization and may, e.g., be represented by an electric field vector's amplitude and phase. In some examples, one or more Stokes parameters $S_1$, $S_2$, $S_3$, which describe the polarization state of an electromagnetic wave at a given time, as known by those skilled in the art, may be determined.

In some examples, Fig. 13, a lightpath from an optical transmitter E2-TX, e.g., of the node E2 of Fig. 11, to a coherent optical receiver E3-RX, e.g., in the node E3 of Fig. 12, may be schematically illustrated as depicted by Fig. 13.

In some examples, Fig. 13, the coherent optical receiver E3-RX may be used to repeatedly, e.g., periodically, e.g., continuously, measure SOP information, e.g., SOP fluctuations, e.g., in real time, thus, for example, providing at least one of the first information I-1 (see, for example, block 200 of Fig. 3) or the sequence SOP-SEQ-ORIG according to the principle of the disclosure in the form of these SOP measurements. In some examples, a SOP monitoring function is symbolized by block SOP-MON of Fig. 13.

In some examples, one or more Stokes parameters $S_1$, $S_2$, $S_3$ may be determined e.g., recorded, e.g., at a regular sampling interval (e.g., once every second, once every minute, or at another regular interval). Note that the SOP monitoring functionality SOP-MON may be implemented as an application-specific integrated circuit (ASIC) or using a field-programmable gate array (FPGA) which typically can be reconfigured. In some examples, the SOP recordings (e.g., raw SOP measurements) may be stored in a data storage medium E3b. In some examples, the data storage medium E3b can be a machine-readable storage media or devices (like program memory or magnetic disks) that can be read by a general or special purpose programmed computer for configuring and controlling operation of a computer to carry out the procedures described herein.

In some examples, Fig. 13, the node E3 may comprise one or more processing devices E3a, e.g., at least similar to the circuitry 101 or the processor 102 (Fig. 1A) of the apparatus 100. In some examples, Fig. 13, the at least one processing device E3a may comprise one or more generic, or specialized processors (such as, e.g., microprocessors, CPUs, GPUs, and FPGAs), chips, and the like, e.g., coupled directly or indirectly to the data storage medium E3b, e.g., via a system bus. In some examples, collected data such as, e.g., characterizing the first information I-1, e.g., SOP data, may be stored by the data storage medium E3b.

In some examples, the at least one processing device E3a may comprise program instructions (e.g., stored in hardware and/or software and/or firmware, e.g., at least similar to element 106 of Fig. 1A) which, in some examples, may be used to implement one or more aspects, e.g., functions, according to the principle of the disclosure.

In some examples, e.g., alternately, some or all functions may be implemented by a state machine (not shown) that may or may not use stored program instructions, may or may not be implemented in one or more ASICs.

In some examples, Fig. 13, the processing device E3a may communicate with a memory device E3c. In some examples, the processing device E3a may execute one or more instructions stored in the memory device E3b. In some examples, the instructions may contain processor-specific instructions created from code by a compiler or interpreter. In some examples, the memory device E3c may, e.g., contain one or more memory units (not shown). In some examples, the memory device E3c and/or the memory unit(s) may, e.g., be nonvolatile and may, e.g., include any type of memory device that keeps stored information while shut off, e.g., powered down. Non-limiting examples of memory devices, which may be used in some examples, include electrically erasable and programmable read-only memory (EEPROM), flash memory, and any other type of non-volatile memory. In some examples, the memory device E3b may contain computer-readable media from which, e.g., the processor device E3a, can read instructions.

In some examples, a computer-readable medium can contain electronic, optical, magnetic, or other storage devices capable of delivering computer-readable instructions or other program code to a processing unit. A magnetic disk, a memory chip, ROM, RAM, an optical storage, or any other medium can be a, for example non-transitory, computer-readable medium.

In some examples, Fig. 13, the memory device E3c may include one or more computer programs or software, which, in some examples, may implement at least some aspects according to the disclosure, such as, e.g., one or more aspects ASP of anomaly detection AD and/or one or more aspects of an analyzer system AS configured to implement, e.g., one or more algorithms or techniques according to the disclosure, e.g., as described herein, and, optionally, an operating system. The algorithms or techniques or the operating system may, in some examples, be used for at least one of managing or controlling an execution of the computer program(s).

In some examples, an anomaly detection and analyzer system according to the principle of the disclosure may, e.g., include one or more functional modules AD, as that may, in some examples, be implemented as software/firmware that is stored in the memory device E3c and executed by the processor, e.g., processing device E3a. In some other examples, one or more functional modules may be implemented in hardware components for instance in the form of ASICs or FPGAs, see, for example, the blocks 104', 104'', 104''' of Fig. 1B.

In some examples, Fig. 13, an anomaly detection and analyzer system may comprise a data processing module DP. In some examples, the data processing module DP may receive information associated with the optical communication network or its fiber(s) E1a, E1b, e.g., information representing polarization characteristics of the optical fiber(s) E1a being monitored, e.g., in the form of the first information I-1.

In some examples, this information I-1, which in some examples may also be referred to as "optical monitoring information", may comprise a stream of SOP data, e.g., in the form of a time series of at least one Stokes parameter, e.g., in the form of a multivariate time series of at least two Stokes parameters.

In some examples, Fig. 13, the data processing module DP may parse and prepare SOP data, e.g., for at least one machine learning model to analyze.

In some examples, Fig. 13, the data processing module DP may comprise one or more software modules with computer-executable program codes for preparing the SOP data (e.g., in the form of the first information I-1), e.g., for an analysis by at least one machine learning model, e.g., at least similar to the pre-processing as explained above with reference to block 210 of Fig. 6. The computer-executable program codes enable the data processing module DP to:

A) Filter the SOP recordings, e.g. SOP data, e.g., in the case of noisy SOP data, e.g., by applying a denoising method (e.g., by applying a moving average filter, or a wavelet transform,

B) Splitting SOP recordings (e.g., splitting each SOP recording), into one or more fixed-length sequences (Note that, in some examples, different SOP recordings may have variable length.),

C) Downsampling the one or more fixed-length sequences (e.g., as obtained by at least one of A) filtering, and B) splitting), e.g., to reduce a computational complexity of at least one ML models (i.e., an anomaly detector model, and/or an anomaly analyzer model).

In some examples, Fig. 13, an anomaly detection and analyzer system according to the principle of the disclosure may include an anomaly detector module AD, e.g., applied to the processed SOP data, as, e.g., output by the data processing module DP, e.g., to identify any abnormal behavior of the monitored system 1000 (Fig. 12), e.g., including rare or new disturbances E6 that may not have been encountered before.

In some examples, Fig. 13, e.g., if an anomaly is identified, the anomaly analyzer module AS may be triggered to perform at least one of: a) classify the anomaly (e.g., to determine a root cause of a fiber disturbance associated with or represented by the anomaly), or b) localize the anomaly, or c) quantify a severity of the anomaly.

In some examples, Fig. 13, the anomaly detector AD may predict, e.g., based on received processed (e.g., pre-processed) SOP data, which, e.g., represents a present behavior the monitored system 1000 a monitored behavior and may, e.g., compare the actual behavior (as, e.g., characterized by the received processed SOP data) to the predicted behavior. In some examples, an anomaly may be recognized when the actual behavior deviates from the expected behavior, e.g., by greater than a given threshold.

In some examples, Fig. 13, the anomaly detector AD may be trained using known-normal data (e.g., SOP fluctuations for no event triggered along the monitored fiber E1a), which may, e.g., be acquired when the monitored system 1000 behaves normally, e.g., to learn features modelling the normal system behavior. In some examples, the anomaly detector AD may be any, e.g., appropriate, type of machine learning technique. In some examples, the anomaly detector AD may be implemented as an autoencoder AUTO-ENC, see, for example, Fig. 14. In some examples, e.g., once trained, the anomaly detector AD may be deployed, e.g., in the field, e.g., in or for at least one optical receiver, e.g., to recognize anomalies.

In some examples, Fig. 13, e.g., once an anomaly has been detected, the anomaly analyzer AS may be applied to the processed (e.g., pre-processed) SOP data, e.g., to identify a type of the anomaly (e.g., to determine a root cause of the fiber disturbance such as digging, fiber tapping, earthquake, etc.), localize it (to determine the time of the anomaly), and quantify its severity.

In some examples, Fig. 13, a machine learning model which may be used for the anomaly analyzer AS may be trained with labeled data, e.g., including known-anomalous behavior. In some examples, specifically, the anomaly analyzer AS may be trained with historical SOP data incorporating one or more, e.g., various, anomaly patterns or signatures.

In some examples, the anomaly analyzer AS may use or may be any type of neural network or neural networks that supports multi-task learning (a type of machine learning technique in which a model is trained to solve multiple tasks simultaneously) such as, e.g., recurrent neural networks (e.g., gated recurrent unit (GRU) or long short-term memory (LSTM), etc.).

In some examples, the anomaly analyzer AS may be trained to perform, e.g., simultaneously, two or more of the following tasks: a) anomaly identification, or b) anomaly localization (e.g., detecting a start time of the anomaly), or c) anomaly severity quantification. In some examples, the anomaly analyzer AS may be configured to take as input the first information I-1, e.g., one or more SOP sequences, e.g., including fluctuations of the one or more Stokes parameters, and may be configured to output at least two of the following elements: a) anomaly type (e.g., digging, excavation, shaking, bending, etc.), or b) anomaly start time, or c) anomaly risk or severity, e.g., simultaneously.

In some examples, a severity or risk of an anomaly may be measured by its likelihood of causing fiber damage. In some examples, a severity or risk of an anomaly may be classified according to any suitable scheme, e.g., providing, three different classes, such as, e.g., "low", "medium", and "high".

In some examples, e.g., if a severity of the anomaly output by the anomaly analyzer AS is "medium" or "high", an alert message, e.g., including the information provided by the anomaly analyzer AS (i.e., the type of the anomaly, the time of the anomaly, and the severity) may be generated and may, e.g., be transmitted to at least one further entity, such as, e.g., a remote-control management system E6 or a control management plane (e.g., as may be provided by software defined networking, SDN), e.g., to apply an appropriate failure handling mechanism to correct the abnormal behavior.

In some examples, Fig. 13, a network interface E3d may be provided, which may, e.g., be used to enable a communication between the coherent optical receiver E3-RX or the node E3, respectively, and the optional entity E6, which, in some examples, may, e.g., form or represent a remote-control management system E6. In some examples, any appropriate wired or wireless communication medium and protocol (e.g., NETCONF or gRPC, etc.) may be used to at least temporarily provide a data connection between the components E3, E6. In some examples, Fig. 13, the network interface E3d may comprise, for instance, an Ethernet card, a network adapter, etc.

In some examples, Fig. 13, the remote-control management system E6 may comprise at least one of the following elements: a) a processing device E6a, or b) a computer readable storage medium E6b, or c) an anomaly localization module AL, e.g., for localizing at least one anomaly, e.g., based on information as provided by the node E3, e.g., via the interface E3d, or d) a failure handling module FH. In some examples, at least a part of the functionality of the remote-control management system E6 may be provided in form of the apparatus 100 (Fig. 1A) or 100' (Fig. 1B) .

In some examples, Fig. 13, e.g., based on a severity and a type of an identified anomaly, a recovery or mitigation rule may be applied, such as, e.g., at least one of: a) re-routing traffic, or b) changing an operational parameter, or c) changing a security setting (e.g. in case of fiber tapping detected) for the monitoring system, or d) (e.g., anticipating) sending a technician to a site where the fiber is expected to be broken, e.g., for mitigating the anomaly, e.g., before leading to any network outages.

In some examples, Fig. 13, as mentioned above, the remote-control management system E6 may, e.g., comprise a processing device E6a which may be used to execute instructions stored in a computer-readable storage medium E6b. In some examples, the computer-readable storage medium E6b may, e.g., include one or multiple software modules such as the anomaly localization module AL and the failure handling module FH. In some examples, the anomaly localization module AL may be configured to determine the physical location of the anomaly (disturbance) along the optical fiber being monitored. In some examples, the failure handling module FH may be configured to apply a corrective action to mitigate the identified anomaly, e.g., before leading to network outages.

In some examples, Fig. 12, both nodes or devices E2, E3 may comprise an apparatus 100, 100' according to the principle of the disclosure and may, e.g., each comprise a coherent optical receiver configured to provide respective first information, e.g., in the form of one or more Stokes parameters, e.g., a time series of Stokes parameters. Thus, in some examples, both devices E2, E3 may comprise a structure as illustrated in detail for device E3 by Fig. 13. In other words, in some examples, device E2 may, too, comprise, inter alia, an anomaly detector AD and an anomaly analyzer AS.

In some examples, Fig. 13, let $t_1$ denote a time of an anomaly output by the anomaly analyzer AS at the coherent optical receiver in the node E3 (e.g., associated with a first transmission direction from node E2 to node E3). In some examples, let $t_2$ denote a time of an anomaly output by anomaly analyzer at the coherent receiver in the node E2 (e.g., associated with a second transmission direction from node E3 to node E2). In some examples, Fig. 13, the anomaly localization module AL may determine, e.g., compute a time difference between $t_1$ and $t_2$ and may use network information NI (e.g., at least one of refractive index, or length of the optical fiber being monitored) to determine a physical, i.e., spatial, location associated with the SOP transient (e.g., anomaly), e.g., along the optical fiber E1 (Fig. 12). Note that in some examples, a synchronization between the receivers in the nodes E2 and E3 may be performed, using, e.g., any suitable synchronization mechanism, such as at least one of Global Positioning system (GPS), or radio signals, or an IEEE 1588 Precision Time Protocol (PTP), e.g., over the network E4.

In some examples, an estimated physical location as determined according to the abovementioned procedure, e.g., based on the time difference between $t1$ and $t2$, can be used for repairing the optical fiber to be broken, e.g., if the event is severe and may lead to a fiber cut. In some examples, Fig. 11, the failure handling module FH may use the estimated physical location of the anomaly along the optical fiber as well as the type of the anomaly to apply the appropriate corrective action.

Fig. 14 shows an architecture of an anomaly detector model AD (Fig. 13) based on an autoencoder AUTO-ENC, according to some examples. In some examples, Fig. 14, the anomaly detector or autoencoder AUTO-ENC comprises an encoder ENC and a decoder DEC, as known by the person skilled in the art of autoencoders. In some examples, Fig. 12, the encoder ENC is configured and/or trained to encode, e.g., compress, its input data, e.g., the first input information IN-1, e.g., as characterized by a pre-processed SOP sequence x, into a comparatively low-dimensionality representation LD-REP (e.g., having less dimensions than the first input information IN-1). In some examples, the decoder DEC is configured and/or trained to reconstruct the original input SOP sequence x, e.g., the first input information IN-1, e.g., given or based on the compressed representation LD-REP output by the encoder ENC, whereby a reconstructed SOP sequence $\hat{x}$ may be attained as the first output information OUT-1. In some examples, the encoder ENC and the decoder DEC may have symmetrical architectures.

In some examples, Fig. 14, the encoder ENC and/or the decoder DEC may be implemented using any type of trainable model, such as, e.g., one or more neural networks, e.g., recurrent neural networks. In some examples, the autoencoder AUTO-ENC may be trained via a backpropagation technique, e.g., to minimize a reconstruction error (e.g., defined as a difference between the reconstructed SOP sequence $\hat{x}$ and the original SOP sequence x), e.g., by utilizing a mean square error as a loss function.

In some examples, Fig. 14, once trained, the autoencoder AUTO-ENC may recognize anomalies, e.g., using an anomaly score that quantifies the difference between the original input (the input SOP sequence x) and the reconstructed input $\hat{x}$ (the reconstructed SOP sequence), e.g., as may be expressed by:

$$Anomaly\ score\ =\ f(x,\ \hat{x}).$$

In some examples, the function $f$ may take different forms: a) a reconstruction error (the difference between the reconstructed input and the input), or b) a root-mean-square error, or c) a mean absolute error, etc.

In some examples, the function $f$ may characterize the level LVL-DISS of dissimilarity as explained above with respect to block 154 of Fig. 3.

In some examples, Fig. 14, the autoencoder may reconstruct any new data, e.g., from a normal state, comparatively effectively since it has the same pattern or distribution as the training data used for training the autoencoder. As a result, in some examples, the anomaly score will be comparatively low. However, when reconstructing data from, e.g., an unseen event or disturbance, in some examples, the autoencoder may generate a comparatively high anomaly score. As a result, in some examples, if the anomaly score exceeds a specific threshold, an anomaly may be detected. Otherwise, e.g., if the anomaly score does not exceed the specific threshold, no anomaly may be detected.

Fig. 15 shows an example of computed anomaly scores or level LVL-DISS of dissimilarity, respectively, according to some examples, e.g., given experimental data including normal (no event or disturbance) and abnormal (mechanical vibrations such as bending, shaking, etc.) SOP sequential data. In some examples, the reconstruction error computed as the difference between the original SOP sequence x and the (reconstructed) SOP sequence $\hat{x}$ output by the anomaly detector model (e.g., the mean square error) is adopted as an anomaly score.

In Fig. 15, the vertical axis depicts a number of the times a data point occurs (e.g., characterizing a frequency of occurrence), whereas the horizontal axis displays the values of the obtained reconstruction errors, thus, e.g., characterizing anomaly scores. The vertical dashed line L illustrates a selected threshold for distinguishing between normal and abnormal instances. From Fig. 15 it can be seen that reconstructions errors for abnormal samples incorporating, e.g., mechanical vibrations patterns, are larger than the reconstruction errors for normal samples (e.g., "no event" SOP sequences). In some examples the anomaly detection model according to some examples may reliably reproduce normal samples, as it was trained with data derived from the same or at least a similar distribution. Hence, lower reconstruction errors, e.g., less than the threshold L, may be yielded for normal cases. In the example of Fig. 15, reconstruction errors are higher, e.g., greater than threshold L, for abnormal situations since the anomaly detection model does not encounter such data associated with abnormal situations during the training phase and hence fails to reconstruct it.

Fig. 16 shows an example of an anomaly recognized by the anomaly detector model according to some examples, given a real-time continuous SOP stream. In some examples, the SOP stream may first be divided into sequences of a predetermined length, e.g., 1500. In some examples, the generated sequences of predetermined length may then be downsampled to produce reduced sequences of, e.g., length 100. In this regard, Fig. 16 shows graphs S1, S2, S3 of time series of three Stokes parameters $S_1$, $S_2$, $S_3$, wherein a region associated with an anomaly is denoted by arrow A1.

Fig. 17 shows an architecture of the machine learning model MLM-AN-ANAL which can be used as an anomaly analyzer model according to some examples. In some examples, second input information IN-2, e.g. characterized or represented by a processed, e.g., pre-processed, sequence derived from SOP recordings (e.g., in the form of the first information I-1) may be fed first into the hidden layer L2, e.g., to extract one or more relevant features.

In some examples, the hidden layer L2 may be considered to form a shared hidden layer, as, in some examples, two or more of the sub-networks SN-1, SN-2, SN-3 may use information as provided by the hidden layer L2.

In some examples, Fig. 17, the shared hidden layer L2 may be a single layer of neurons or may be any type of neural network or a combination of two, e.g., different, types of neural networks.

In some examples, a number of layers and/or a number of neurons (or cells) in the shared hidden layer L2 may represent one or more hyperparameters, which, in some examples, may be optimized, e.g., to boost the performance of the machine learning model MLM-AN-ANAL. In the example architecture of Fig. 17, information, e.g., knowledge, which is processed, e.g., shared by the hidden layer L2 may be transferred to the task-specific sub-networks SN-1, SN-2, SN-3 for solving the following tasks: anomaly identification $T_1$, anomaly localization $T_2$, and anomaly severity quantification $T_3$. In some examples, at least one of the three task specific sub-networks SN-1, SN-2, SN-3 may comprise or be made of one, e.g., single, layer of neurons, e.g., a fully-connected layer. In some examples, more than one layer may be used for at least one of the sub-networks SN-1, SN-2, SN-3, and a number of neurons in each task-specific layer or sub-network may be used as a tuning parameter, e.g., to optimize at least one aspect of the machine learning model MLM-AN-ANAL, e.g., with respect to at least one of the tasks $T_1$, $T_2$, $T_3$.

In some examples, Fig. 17, an output layer of the sub-network SN-1 for solving the task $T_1$ (e.g., anomaly identification) may be a Softmax layer configured to output a probability of each event type, e.g., for a plurality of events "Event_1", ..., "Event_k", ..., "Event_N", wherein, for example, N many events, wherein each event may be associated with a specific type of anomaly.

In some examples, Fig. 17, an output layer of the sub-network SN-2 for solving the task $T_2$ (e.g., anomaly localization) may be configured to output an index of a start time associated with an event (e.g., "event start time").

In some examples, Fig. 17, an output layer of the sub-network SN-3 for solving the task $T_3$ (e.g., anomaly severity quantification) may be a Softmax layer configured to output a probability of each event severity level, which, in some examples, may, e.g., be classified into, e.g., three classes or levels, e.g., "low", or "medium", or "high").

In some examples, e.g., if the event severity is to be quantified, e.g., by assigning a risk score, e.g., rather than a severity level category, as mentioned above, the last layer of sub-network SN-3 may, e.g., be a linear layer that may be configured to output a risk score, e.g., an estimated value of a risk rather than an output of a severity category.

In some examples, the anomaly analyzer which may be implemented using the example architecture MLM-AN-ANAL of Fig. 17 may be trained by minimizing a loss function formulated as follows:

$$\mathcal{L}_{total} = \lambda_1 \mathcal{L} T_1 + \lambda_2 \mathcal{L} T_2 + \lambda_3 \mathcal{L} T_3,$$

e.g., a linear combination, wherein $\mathcal{L} T_i$ denotes the loss of $T_i$. In some examples, $\mathcal{L} T_1$ and $\mathcal{L} T_3$ may be any loss function used for solving multi-class classification problems, such as, e.g., categorical cross-entropy. In some examples, $\mathcal{L} T_2$ may be any loss function used for regression problems such as, e.g., mean squared error. In some examples, $\lambda_2$, $\lambda_2$, and $\lambda_3$ are hyperparameters which may be used for optimization, e.g., tuning.

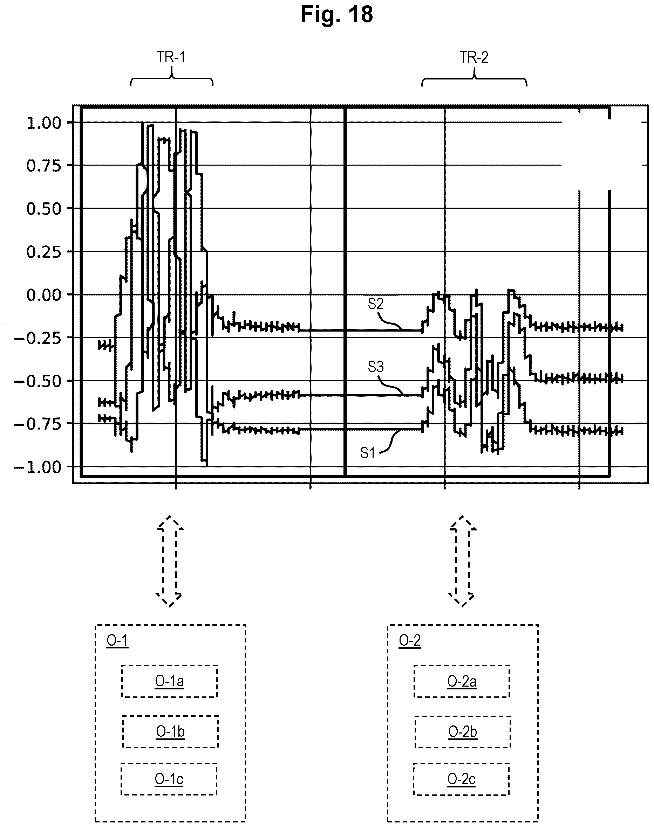

Fig. 18 shows time series, along a horizontal time axis, of Stokes parameters $S_1$, $S_2$, $S_3$, see the graphs S1, S2, S3, according to an example, together with respective example outputs O-1, O-2 of an anomaly analyzer according to some examples, e.g., using the example architecture MLM-AN-ANAL of Fig. 17, e.g., based on SOP fluctuations as may be characterized by at least one of the Stokes parameters $S_1$, $S_2$, $S_3$, e.g., incorporating anomalies detected by the anomaly detector model.

As an example, referring to Fig. 18, the first example output O-1, which may be generated by the anomaly analyzer model MLM-AN-ANAL of Fig. 17 based on the Stokes parameters' values within a first time range TR-1, may yield an event or anomaly type O-1a indicating a bending of the optical fiber, an event start time O-1b, e.g., associated with the start of the first time range TR-1, and an event severity O-1c, e.g. indicating a medium severity of this event.

As a further example, referring to Fig. 18, the second example output O-2, which may be generated by the anomaly analyzer model MLM-AN-ANAL of Fig. 17 based on the Stokes parameters' values within a second time range TR-2, may yield an event or anomaly type O-2a indicating a shaking of the optical fiber, an event start time O-2b, e.g., associated with the start of the second time range TR-2, and an event severity O-2c, e.g. indicating a medium severity of this event.

In some examples, the anomaly analyzer model MLM-AN-ANAL of Fig. 17 may be trained, e.g., incrementally or repeatedly, e.g., periodically, e.g., to keep it updated. This way, in some examples, it is possible to adapt the anomaly analyzer model MLM-AN-ANAL, e.g., to changing or new data patterns, e.g., in production (e.g., after deployment), which, in some examples, may help to avoid a performance deterioration or loss.

Returning to Fig. 12, in some examples, at least some of the following aspects may, at least temporarily, be performed in or by the remote management system E6, e.g., additionally or alternatively to the node E3 or E2: a) SOP monitoring data, or b) data preprocessing, or c) e.g., real-time, anomaly detection and/or analysis, e.g., using at least one of the components AD, AS, AUTO-ENC, ML-AN-ANAL. As an example, this configuration may, e.g., be adopted if there are, for instance, insufficient computational resources in the coherent optical receiver E3-RX or its node E3, respectively, e.g., for running an inference of at least one of the machine learning models according to some examples (e.g., anomaly detector and/or anomaly analyzer), and/or for data storage.

In some examples, Fig. 13, however, having at least some aspects of the disclosure, e.g., the machine learning models, running inside the coherent receiver E3-RX or its node E3, respectively, may, in some examples, enable to detect and/or analyze anomalies as soon as possible, e.g., if it were running in a control management plane.

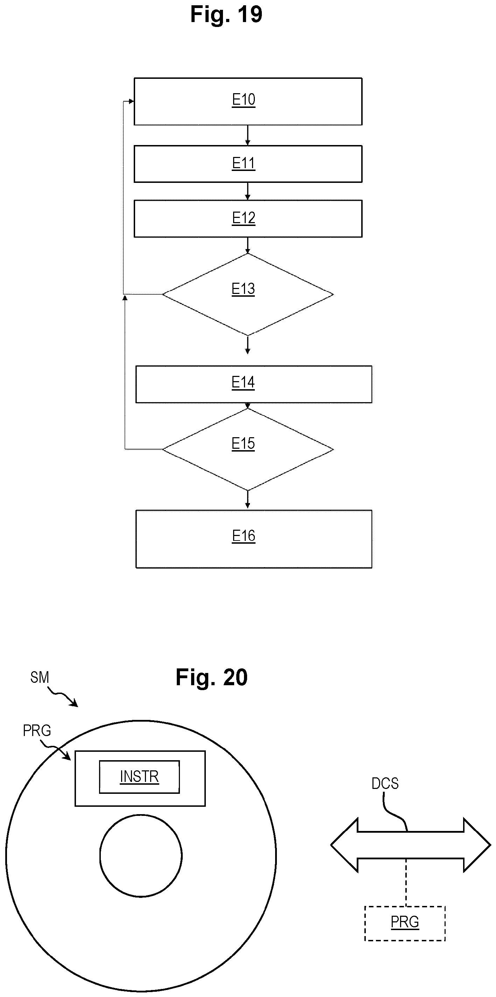

Fig. 19 illustrates a simplified process according to some examples. Element E10 symbolizes determining SOP information, e.g., Stokes parameters or "SOP parameters", e.g., in the form of the first information I-1, e.g., from a coherent optical receiver E3-RX (Fig. 13). In some examples, the SOP parameters may be collected in real-time. In some examples, at least one SOP recording may, e.g., be a multivariate time series of, e.g., variable length $T$, that may, e.g., incorporate a variation of at least two Stokes parameters ($S_1$, $S_2$, and $S_3$), e.g., as a function of time, e.g., denoted by $X = \{ S_{1,T}, S_{2,T}, S_{3,T} \}$ where $S_{i,T} = \{S_{i,1}, S_{i,2}, ...,S_{i,T}\}$ represents a set of the Stokes parameter $S_i$ sequence and $S_{i,k}$ is a value of the Stokes parameter $S_i$ at time step $k$.

Element E11 symbolizes a pre-processing of the data as obtained by block E10. In some examples, the time series of each Stokes parameter may be denoised and may then be divided into nonoverlapping sequences of fixed length $n$ where $n < T$. In some examples, e.g., if a length of a last produced sequence is lower than $n$, in some examples, that sequence may, e.g., be padded, e.g., to the same length $n$, e.g., by appending zeros or another padding value at the end. In some examples, the so generated sequences may then be downsampled, e.g., to perform dimension reduction. For downsampling the produced sequences, in some examples, one or more dimensionality reduction methods, such as, e.g.,

piecewise aggregate approximation, may be used. In some examples, a produced processed sequence may be denoted by $x = \{ \overline{S}_{1,m}, \overline{S}_{2,m}, \overline{S}_{3,m}\}$ where $\overline{S}_{i,m}$ characterizes a downsampled sequence corresponding to the Stokes parameters $S_i$, and wherein $m$ is a length of the downsampled or reduced sequence.

In some examples, it should be noted that instead of exploiting fluctuations of all the three Stokes parameters, e.g., for training of the machine learning models and/or for inference, using at least one, e.g., only, one Stokes parameter $Si$, or its temporal variations, respectively, may be sufficient to ensure a same performance as, e.g., when using models that are fed with sequences derived from two or more Stokes parameters. Therefore, in some examples, it may be considered determining, e.g., extracting, e.g., only, one Stokes parameter $S_k$, wherein k is 1 or 2 or 3, or its temporal variations, respectively, e.g., for processing a respective sequence, e.g., for feeding it into the one or more machine learning models. Note that in some examples, hence, the input of a respective machine learning model may, e.g., be represented by $x = \{S_k, m\}$.

In some examples, Fig. 19, the processed sequences as, e.g., obtained by block E11, may be provided to an anomaly detector model E12, e.g., at least similar to the example autoencoder AUTO-ENC of Fig. 14, e.g., for detecting any anomalies. In some examples, the anomaly detector model E12 may reconstruct the input x (e.g., predict a system behavior), thus, e.g., obtaining the reconstructed input $\hat{x}$.

In some examples, if the reconstructed input $\hat{x}$ (which, e.g., characterizes an expected behavior) deviates from the input x (e.g., the actual system behavior) by a certain threshold, an anomaly may be considered as detected. In some examples, determining this deviation between the parameters $\hat{x}, x$ may be performed by element or block E13 of Fig. 19. In some examples, if an anomaly is detected, the procedure continues with element E14, wherein, e.g., an anomaly analyzer, see, for example Fig. 17, is triggered. In some examples, the anomaly analyzer may output at least one of: a) an anomaly type, or b) an anomaly start time, or c) an anomaly severity. In some examples, Fig. 19, e.g., if no anomaly is detected by block E13, the procedure returns to element E10.

In some examples, it should be noted that while dividing first information I-1, e.g., in the form of, e.g., continuous, SOP stream data, into nonoverlapping sequences, there may be circumstances where a part of an anomaly signature is in a first sequence and where another part of the same anomaly signature is in a next, e.g., subsequent, sequence. As a result, in some examples, there may be instances where the anomaly analyzer outputs may be duplicated.

As an example, if during a SOP sequence processing a part of an anomaly "$a$" exists in the first sequence and the remaining part of that anomaly "$a$" is in the next sequence, an anomaly analyzer according to some examples may output for both the first sequence and the second sequence the anomaly "*a*" as anomaly type. Whereas in reality, in some examples, there may be only one anomaly, that may be split into two sequences.

In some examples, e.g., to avoid a potential duplication of the anomaly analyzer's output(s), an architecture of the respective machine learning model may, e.g., be extended, e.g., to output whether an anomaly is "partial" or "entire". In some examples, this may, e.g., be attained by providing a further, e.g., fourth sub-network to the configuration MLM-AN-ANAL of Fig. 15, wherein such further sub-network may, e.g., be configured to output the type or kind of anomaly pattern, e.g., "partial" or "entire".

In some examples, the anomaly analyzer may, e.g., be trained on SOP sequences that may include partial or entire anomaly patterns for signatures, or both. In some examples, e.g., given a new output of an anomaly analyzer, a duplication of the outcomes may be avoided. For example, if a specific anomaly is partial for a sequence, in some examples, the outcomes of the anomaly for that sequence may be considered while, for example, the outcomes of the next sequence may be avoided.

In some examples, e.g., if a severity of an anomaly is above a given threshold, which may, e.g., be determined in element E15 of Fig. 19, an alert message may be sent, see, for example, element E16, e.g., to a control and management system E6 (Fig. 13). Otherwise, the procedure may, e.g., return to block E10.

In some examples, the alert message (block E16) may, e.g., comprise or include at least one of: a) the anomaly type, or b) an anomaly start time, or c) an anomaly severity score. In some examples, this information may be used, e.g., by a control and management plane, e.g., to trigger one or more action(s), such as, e.g., a proactive re-routing of traffic, e.g., over another optical fiber or lightpath, and/or maintenance action, etc.

Some examples, Fig. 20, relate to a computer program PRG comprising instructions INSTR which, when executed by an apparatus 100, 100', cause the apparatus 100, 100' to perform the method according to the disclosure.

Some examples, Fig. 20, relate to a computer-readable storage medium SM, for example a non-transitory computer-readable storage medium SM, comprising the computer program PRG according to the disclosure.

Some examples, Fig. 20, relate to a data carrier signal DCS carrying and/or characterizing the computer program PRG according to the disclosure.

**Claims**

1. An apparatus (100) for an optical receiver (1), the apparatus (100) comprising processing circuitry (101) configured to: receive (150) an original state-of-polarization, SOP, sequence (SOP-SEQ-ORIG), the original SOP sequence (SOP-SEQ-ORIG) being a sequence of SOP samples of an optical signal (SIG) received at the optical receiver (1); generate (152) a reconstructed SOP sequence (SOP-SEQ-REC) by applying a lossy sequence reconstruction algorithm (ALG) to the original SOP sequence (SOP-SEQ-ORIG); determine (154) a level of dissimilarity (LVL-DISS) between the original SOP sequence (SOP-SEQ-ORIG) and the reconstructed SOP sequence (SOP-SEQ-REC); and signal an anomaly (AN) in response to the level of dissimilarity (LVL-DISS) exceeding a set threshold.

2. The apparatus (100), wherein the apparatus (100) is connectable to or integrated in the optical receiver (1).

3. The apparatus (100) of claim or 2, wherein the lossy sequence reconstruction algorithm (ALG) is configured to reconstruct SOP sequences of an anomalous type less accurately than SOP sequences of a normal type.

4. The apparatus (100) of any of the claims 1 to 3, wherein the lossy sequence reconstruction algorithm (ALG) is implemented at least partly in a neural network.

5. The apparatus (100) of any of the preceding claims, wherein the lossy sequence reconstruction algorithm (ALG) is implemented at least partly in a neural network, wherein the neural network is trained to reconstruct SOP sequences of a normal type but not trained to reconstruct SOP sequences of an anomalous type.

6. The apparatus (100) of claim 4 or 5, wherein the neural network is or comprises an autoencoder.

7. The apparatus (100) of any one of the preceding claims, wherein each sample in the sequence of SOP samples represents a Stokes vector.

8. An apparatus (100') for an optical receiver (1), the apparatus (100') comprising means (102') for: receiving (150) an original state-of-polarization, SOP, sequence (SOP-SEQ-ORIG), the original SOP sequence (SOP-SEQ-ORIG) being a sequence of SOP samples of an optical signal (SIG) received at the optical receiver (1); generating (152) a reconstructed SOP sequence (SOP-SEQ-REC) by applying a lossy sequence reconstruction algorithm (ALG) to the original SOP sequence (SOP-SEQ-ORIG); determining (154) a level of dissimilarity (LVL-DISS) between the original SOP sequence (SOP-SEQ-ORIG) and the reconstructed SOP sequence (SOP-SEQ-REC); and signaling an anomaly (AN) in response to the level of dissimilarity (LVL-DISS) exceeding a set threshold.

9. An optical receiver (1) comprising at least one apparatus (100; 100') according to any of the preceding claims.

10. A method of operating an optical receiver (1), comprising:

   receiving (150) an original state-of-polarization, SOP, sequence (SOP-SEQ-ORIG), the original SOP sequence (SOP-SEQ-ORIG) being a sequence of SOP samples of an optical signal (SIG) received at the optical receiver (1); generating (152) a reconstructed SOP sequence (SOP-SEQ-REC) by applying a lossy sequence reconstruction algorithm (ALG) to the original SOP sequence (SOP-SEQ-ORIG); determining (154) a level of dissimilarity (LVL-DISS) between the original SOP sequence (SOP-SEQ-ORIG) and the reconstructed SOP sequence (SOP-SEQ-REC); and signaling an anomaly (AN) in response to the level of dissimilarity (LVL-DISS) exceeding a set threshold.

11. The method according to claim 10, wherein the lossy sequence reconstruction algorithm (ALG) is configured to reconstruct SOP sequences of an anomalous type less accurately than SOP sequences of a normal type.

12. The method according to any of the claims 10 to 11, comprising: implementing (160) the lossy sequence reconstruction algorithm (ALG) at least partly in a neural network.

13. The method of claim 10, comprising: implementing (160) the lossy sequence reconstruction algorithm (ALG) at least partly in a neural network, wherein the neural network is trained (162) to reconstruct SOP sequences of a normal type but not trained to reconstruct SOP sequences of an anomalous type.

14. The method of claim 12 or 13, wherein the neural network is or comprises an autoencoder.

15. The method of any of the claims 10 to 14, wherein each sample in the sequence of SOP samples represents a Stokes vector.

## Fig. 1A

## Fig. 1B

## Fig. 2

## Fig. 3

150 — RECEIVE ORIGINAL STATE-OF-POLARIZATION SEQUENCE

SOP-SEQ-ORIG

152 — GENERATE RECONSTRUCTED SOP SEQUENCE

SOP-SEQ-REC

154 — DETERMINE LEVEL OF DISSIMILARITY BETWEEN ORIGINAL SOP SEQUENCE AND RECONSTRUCTED SOP SEQUENCE

LVL-DISS

156 — SIGNAL ANOMALY IN RESPONSE TO LEVEL OF DISSIMILARITY EXCEEDING THRESHOLD

AN

## Fig. 4

160 — IMPLEMENT LOSSY SEQUENCE RECONSTRUCTION ALGORITHM AT LEAST PARTLY IN NEURAL NETWORK

ALG

162 — TRAIN NEURAL NETWORK

SOP-SEQ-REC

# Fig. 5

200 → PROVIDE FIRST INFORMATION CHARACTERIZING POLARIZATION CHARACTERISTICS OF AT LEAST ONE OPTICAL FIBER

I-1

202 → DETERMINE PREDICTED OPERATIONAL BEHAVIOR OF AT LEAST ONE OPTICAL FIBER BASED ON FIRST INFORMATION USING AT LEAST ONE MACHINE LEARNING TECHNIQUE

OP-BEHAV-PRED

204 → DETERMINE SECOND INFORMATION CHARACTERIZING POTENTIAL ANOMALY WITH RESPECT TO AT LEAST ONE OPTICAL FIBER BASED ON COMPARISON OF PREDICTED OPERATIONAL BEHAVIOR WITH ACTUAL OPERATIONAL BEHAVIOR

I-2

206 → EVALUATE SECOND INFORMATION

I-2

# Fig. 6

210 → PERFORM PRE-PROCESSING OF FIRST INFORMATION TO OBTAIN PRE-PROCESSED FIRST INFORMATION

I-1'

212 → DETERMINE PREDICTED OPERATIONAL BEHAVIOR OF AT LEAST ONE OPTICAL FIBER BASED ON PRE-PROCESSED FIRST INFORMATION USING AT LEAST ONE MACHINE LEARNING TECHNIQUE

OP-BEHAV-PRED

# Fig. 7

220 — | PROVIDE AUTOENCODER |

↓ AUTO-ENC

222 — | DETERMINE SECOND INFORMATION BASED ON FIRST INPUT INFORMATION AND FIRST OUTPUT INFORMATION OF AUTO-ENCODER |

↓ I-2

# Fig. 8

230 — | DETERMINE WHETHER SECOND INFORMATION EXCEED PREDETERMINED FIRST THRESHOLD |

↓ I-2 > TS-1?

232 — | IF SECOND INFORMATION EXCEED PREDETERMINED FIRST THRESHOLD, ANALYZE ANOMALY ASSOCIATED WITH AT LEAST ONE OPTICAL FIBER |

↓ AN

# Fig. 9

232a — | DETERMINE TYPE OF ANOMALY |

232b,
232c — | DETERMINE AT LEAST ONE OF TEMPORAL POSITION OR SPATIAL POSITION OF ANOMALY |

232d — | DETERMINE SEVERITY OF ANOMALY |

## Fig. 10

235 — DETERMINE WHETHER SEVERITY OF ANOMALY EXCEEDS PREDETERMINED SECOND THRESHOLD

AN-SEV > TS-2?

237 — IF SEVERITY OF ANOMALY EXCEEDS PREDETERMINED SECOND THRESHOLD, PERFORM FAILURE HANDLING PROCEDURE

PROC-FH

## Fig. 11

240 — PROVIDE MACHINE LEARNING MODEL FOR ANALYZING POTENTIAL ANOMALY WITH RESPECT TO OPTICAL FIBER

MLM-AN-ANAL

242 — ANALYZE POTENTIAL ANOMALY WITH RESPECT TO OPTICAL FIBER USING MACHINE LEARNING MODEL

MLM-AN-ANAL

# Fig. 12

# Fig. 13

# Fig. 14

AUTO-ENC   IN-1           LD-REP           OUT-1

ENC        DEC

# Fig. 15

# Fig. 16

# Fig. 17

# Fig. 18

# Fig. 19

E10

E11

E12

E13

E14

E15

E16

# Fig. 20

SM

PRG

INSTR

DCS

PRG

Europäisches Patentamt
European Patent Office
Office européen des brevets

# EUROPEAN SEARCH REPORT

**Application Number**

EP 24 31 5395

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 777 598 B2 (CIENA CORP [US]) 3 October 2023 (2023-10-03) | 1-15 | INV. H04B10/079 |
| Y | * column 4, line 15 - line 23; figures 4,5 * * column 5, line 56 - line 63 * * column 11, line 39 - line 57 * * column 5, line 42; claim 12 * | 3 | |
| A | KAPLAN M OGUZ ET AL: "An improved BiGAN based approach for anomaly detection", PROCEDIA COMPUTER SCIENCE, ELSEVIER, AMSTERDAM, NL, vol. 176, 1 January 2020 (2020-01-01), pages 185-194, XP086277391, ISSN: 1877-0509, DOI: 10.1016/J.PROCS.2020.08.020 [retrieved on 2020-10-02] * Part 2 and 3 * | 1-15 | |
| Y | US 11 843 623 B2 (MITSUBISHI ELECTRIC RES LABORATORIES INC [US]) 12 December 2023 (2023-12-12) * column 6, line 65 - column 7, line 18 * * column 10, line 21 - line 30 * | 3 | **TECHNICAL FIELDS SEARCHED (IPC)** H04B |
| A | US 2024/072891 A1 (BJØRNSTAD STEINAR [NO]) 29 February 2024 (2024-02-29) * paragraph [0008]; figure 2 * | 1-15 | |
| A | US 2021/058154 A1 (MUSUMECI FRANCESCO [IT] ET AL) 25 February 2021 (2021-02-25) * figure 3 * | 1-15 | |

-/--

The present search report has been drawn up for all claims

| Place of search | Date of completion of the search | Examiner |
|---|---|---|
| Munich | 5 February 2025 | Borsier, Celine |

EPO FORM 1503 03.82 (P04C01)

page 1 of 2

Europäisches
Patentamt

European
Patent Office

Office européen
des brevets

**EUROPEAN SEARCH REPORT**

Application Number

EP 24 31 5395

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KHOULOUD ABDELLI ET AL: "Machine Learning-based Anomaly Detection in Optical Fiber Monitoring", ARXIV.ORG, CORNELL UNIVERSITY LIBRARY, 201 OLIN LIBRARY CORNELL UNIVERSITY ITHACA, NY 14853, 19 March 2022 (2022-03-19), XP091188287, DOI: 10.1364/JOCN.451289 * the whole document * | 1-15 | |

TECHNICAL FIELDS
SEARCHED      (IPC)

The present search report has been drawn up for all claims

| Place of search | Date of completion of the search | Examiner |
|---|---|---|
| Munich | 5 February 2025 | Borsier, Celine |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.............................................................................................
& : member of the same patent family, corresponding
    document

EPO FORM 1503 03.82 (P04C01)

page 2 of 2

## ANNEX TO THE EUROPEAN SEARCH REPORT
## ON EUROPEAN PATENT APPLICATION NO.

EP 24 31 5395

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2025

| Patent document cited in search report | | Publication date | Patent family member(s) | | Publication date |
|---|---|---|---|---|---|
| US 11777598 | B2 | 03-10-2023 | NONE | | |
| US 11843623 | B2 | 12-12-2023 | CN | 116964574 A | 27-10-2023 |
| | | | EP | 4128062 A1 | 08-02-2023 |
| | | | JP | 7551011 B2 | 13-09-2024 |
| | | | JP | 2024507297 A | 16-02-2024 |
| | | | US | 2022303288 A1 | 22-09-2022 |
| | | | WO | 2022195976 A1 | 22-09-2022 |
| US 2024072891 | A1 | 29-02-2024 | EP | 4302431 A1 | 10-01-2024 |
| | | | US | 2024072891 A1 | 29-02-2024 |
| | | | WO | 2022185075 A1 | 09-09-2022 |
| US 2021058154 | A1 | 25-02-2021 | CN | 111971909 A | 20-11-2020 |
| | | | EP | 3763061 A1 | 13-01-2021 |
| | | | US | 2021058154 A1 | 25-02-2021 |
| | | | WO | 2019170873 A1 | 12-09-2019 |

EPO FORM P0459

For more details about this annex : see Official Journal of the European Patent Office, No. 12/82